# EUROPEAN PATENT APPLICATION

(11) **EP 4 471 613 A1**
(43) Date of publication of application: **04.12.2024**
(21) Application number: 23315222.2
(22) Date of filing: 31.05.2023
(51) Int. Cl.: G06F 16/23

(54) **HANDLING OF COMPLEX DATABASE RESULTS SETS**

(71) Applicant: Amadeus S.A.S., 06410 Biot (FR)
(72) Inventor: REISSMAN, Pierre-Jean, 06410 Biot (FR); ANTONIN, Johan, 06410 Biot (FR); TEXIER, Rodolphe, 06410 Biot (FR); MAINI, Massimiliano, 06410 Biot (FR)
(74) Representative: Samson & Partner Patentanwälte mbB

(57) **Abstract**

In an information technology system complex database result sets are efficiently handled, wherein a complex data record comprises a plurality of data elements of different types which are hosted by a plurality of databases. In response to receipt of an indication to at least a first data element of the complex data record, a number of second data elements of the complex data record is automatically identified, which are associated with the first data element subject to the modification. For each identified second data element, a number of candidate updated data elements is retrieved from the plurality of databases in parallel, including retrieving a number of candidate updated first type data elements from a first database and retrieving a number of candidate updated second type data elements from a second database. Based on the retrieved candidate updated data elements a candidate updated complex data record is determined, and the candidate updated complex data record is returned.

## Description

### FIELD

The present disclosure relates generally to an information technology method and a system. More specifically, the present disclosure relates to handling of complex database result sets, particularly to modification of complex data records.

### BACKGROUND

Some data records include various distinct components (which may herein be referred as data elements), e.g., representations of different real-world items, e.g., tangible goods, services, or the like. The delivery or provision of those items may be interdependent, such that a change to the delivery or provision of a first item may necessitate changes to the delivery or provision of other items. Further, different items or subsets of items may be provided by different suppliers, and therefore different components of the data record may be hosted, e.g., generated, handled or stored, by distinct supplier computing systems, e.g., databases.

Effecting changes to the delivery or provision of items may therefore involve manipulation of the above-mentioned data record, via communication with respective supplier computing systems, e.g., databases. However, the real-world interdependencies mentioned above may be poorly represented, or not represented, in the data record after such changes. Further, manipulating the contents of the data record may involve interactions with distinct computing systems for each component to be changed. The resulting changes may therefore be error-prone, and/or make inefficient use of computational resources.

### SUMMARY

The present disclosure seeks to provide improvements of the existing approaches and methodologies for handling complex database result sets, in particular in the area of efficiently modifying complex data records. The present mechanisms are set forth by the claims.

According to a first aspect, a method (which may be considered as a computer-implemented method) for handling complex database result sets performed by a database system is presented. The database system (in or by which the method may be realized) comprises a memory storing a complex data record comprising a plurality of data elements of different types; communication links to a plurality of databases hosting data elements of different types including at least first database hosting data elements of a first type and second database hosting data elements of a second type. In the method an indication defining a modification to at least a first data element of the data elements of the complex data record stored in the memory is received. In response to receipt of the indication, a number of second data elements of the complex data record is automatically identified, which are associated with the first data element subject to the modification, the identified second data elements including at least a first type data element and a second type data element. For each identified second data element, a number of candidate updated data elements is retrieved, via the communication links, from the plurality of databases in parallel, including retrieving a number of candidate updated first type data elements from the first database and retrieving a number of candidate updated second type data elements from the second database in parallel. A candidate updated complex data record is determined based on the retrieved candidate updated data elements including the candidate updated first type data elements and the candidate updated second type data elements, and the candidate updated complex data record is returned.

In some embodiments, determining the candidate updated complex data record comprises: preparing normalized representations of the retrieved candidate updated data elements; comparing the normalized representations of the retrieved candidate updated data elements; and selecting, based on the comparing, at least one candidate updated first type data element and at least one candidate updated second type data element to be included in the candidate updated complex data record.

In some embodiments, the normalized representations of the retrieved candidate updated data elements are prepared on the basis of at least a subset of parameter values of the retrieved candidate updated data elements.

In some embodiments, retrieving the number of candidate updated data elements from the plurality of databases in parallel comprises: generating a request containing data element attributes according to the modification.

In some embodiments, in response to returning the candidate updated complex data record, a selection of one of the candidate updated first type data elements and one of the candidate updated second type data elements is received; an update sequence to update the first database and the second database is determined based on the received selection; transaction requests are sequentially transmitted via the communication links to the first database and to the second database in accordance with the determined update sequence to update the first database and the second database based on the received selection.

In some embodiments, in response to receiving the selection of one of the candidate updated first type data elements and one of the candidate updated second type data elements, the complex data record is updated based on the selected updated first type data element and the selected updated second type data element.

In some embodiments, retrieving the number of candidate updated data elements from the plurality of databases in parallel comprises receiving a plurality of candidate updated first type data elements and a plurality of candidate updated second type data elements; and determining a candidate updated complex data record comprises automatically selecting one of the received plurality of candidate updated first type data elements and one of the received plurality of candidate updated second type data elements.

In some embodiments, the modification includes one or more modified parameter values of the first data element; and automatically selecting one of the received plurality of candidate updated first type data elements and one of the received plurality of candidate updated second type data elements comprises comparing one or more modified parameter values of the first data element with corresponding parameter values of the received candidate updated data elements.

In some embodiments, selectable graphical elements corresponding to respective data elements of the complex data record are presented, the graphical elements being representative of one or more parameter values of the data elements of the complex data record; wherein the indication defining the modification to the first data element comprises, represents or is based on a selective operation on one of the graphical elements being representative of the one or more modified parameter values of the first data element.

In some embodiments, returning the candidate updated complex data record comprises updating the graphical elements corresponding to the candidate updated data elements.

According to a second aspect, a database system for handling complex database result sets is presented. The database system comprises a memory storing a complex data record comprising a plurality of data elements of different types; communication links to a plurality of databases hosting data elements of different types including at least first database hosting data elements of a first type and second database hosting data elements of a second type. The database system (e.g., by way of a processor and a memory with instructions) is arranged to perform any one of the aforementioned functionalities.

According to a third aspect, a computer program, a computer program product, and/or a (non-transitory) computer-readable storage medium are presented. Any one of these has instructions or program instructions which implement any one of the aforementioned functionalities when executed by at least one processor.

### BRIEF DESCRIPTIONS OF THE DRAWINGS

Aspects, examples and embodiments of the present disclosure are described with reference to the following figures.
FIG. 1 illustrates a system for the modification of complex data records.
FIG. 2 illustrates a flow diagram of a method for the modification of complex data records.
FIG. 3 illustrates a sequence diagram of a procedure for the modification of complex data records.
FIG. 4 illustrates a schematic block diagram of a database system capable of modification of complex data records.
FIG. 5 illustrates a system for the modification of complex data records.
FIG. 6A illustrates an example of an internal structure of a client device in the system of FIG. 1 or 5.
FIG. 6B illustrates an example of an internal structure of a computing or computation device in the system of FIG. 1 or an intermediation server in the system of FIG. 5.
FIG. 7 illustrates a flowchart of a method for the modification of complex data records in an exemplary use case.
FIG. 8 illustrates an example performance of block 305 of the method of FIG. 7 in the exemplary use case.
FIG. 9 illustrates an example performance of block 310 of the method of FIG. 7 in the exemplary use case.
FIG. 10 illustrates an example performance of block 315 of the method of FIG. 7 in the exemplary use case.
FIG. 11 illustrates another example performance of block 310 of the method of FIG. 7 in the exemplary use case.
FIG. 12 illustrates an example performance of block 320 of the method of FIG. 7 in the exemplary use case.
FIG. 13 illustrates an example performance of block 325 of the method of FIG. 7 in the exemplary use case.
FIGS. 14 and 15 illustrate an example performance of block 335 of the method of FIG. 7 in the exemplary use case.
FIG. 16 illustrates an example of an internal structure of a computing or computation device implementing one or more functionalities of the present disclosure.

### DETAILED DESCRIPTION

The present disclosure generally relates to the handling of complex database result sets which may also be referred to as complex data records. Such complex database result sets or complex data records comprise a plurality of data elements or components of different types. The plurality of data elements or components of a complex database result set or complex data record may be hosted, e.g., generated, handled or stored, by different databases or computing systems and may be interdependent. While the plurality of data elements or components of a complex database result set or complex data record may interdepend such that a change of one of them affects one or more of the others, such interdependence may not be reflected in or evident from (the data in/at) the individual databases or computing systems. Rather, traditional database systems utilize strict request-response protocols being limited to data elements or components indicated by data request without considering any interdependencies between multiple data elements or components of complex database results sets or complex data records.

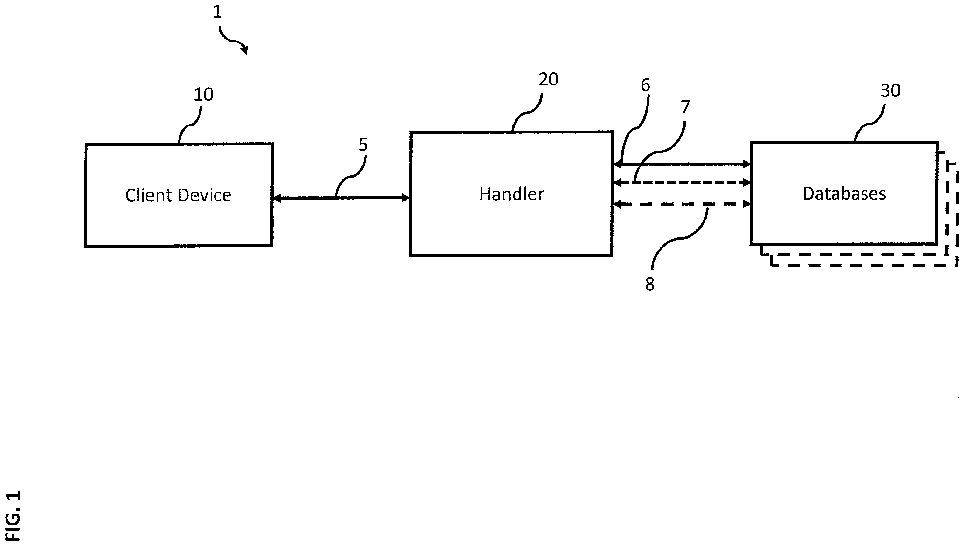

In view thereof, the present disclosure tackles this technical problem by way of approaches and methodologies for handling complex database result sets or complex data records, in particular by enabling an efficient (and consistent) modification thereof. Generally, the present disclosure proposes a database protocol and backend technology for handling complex data records in a processing efficient manner. For illustration purposes, various embodiments and use cases of the general aspects are described. FIG. 1 illustrates a system 1 for the modification of complex data records. The system 1 equipped with the functionalities and capable of executing the methods described herein includes at least one client device 10, a handler 20 and a plurality of databases 30. The handler 20 as such or any combination of the at least one client device 10, the handler 20 and the plurality of databases 30 may be regarded or configured as a database system. In some embodiments, a database system at least comprises a memory storing a complex data record comprising a plurality of data elements of different types and communication links to a plurality of databases hosting data elements of different types including at least a first database hosting data elements of a first type and a second database hosting data elements of a second type.

A type as referred to herein generally indicates a property of a data element of a complex data record. Different types indicate that data elements of a complex data record are different, at least in some property. For example, data elements of different types may be of different data structures, e.g. formatted according to different data schemes. Alternatively or additionally, data elements of different types may contain or relate to contents of different types, such as e.g. contents relating to different (real-world) items like communication network parameters, travel services, or the like. Alternatively or additionally, data elements of different types may originate from different databases, which may but do not need to employ different database schemes. Non-limiting examples of data elements of different types will be given below.

The client device 10 is a stationary or mobile computerized user device, for example an Information Technology (IT) device composed of hardware and/or software. Non-limiting examples of the client device 10 are a personal computer, a laptop, a mobile station, a server, or the like. The client device 10 is communicatively coupled to the handler 20 via an interface 5. The interface may, for example, utilize a wide area network including the Internet and/or a mobile communications network according to any communication method, such as 2G/3G/4G/5G standards, and/or a WiFi/WLAN network according to IEEE specifications.

The handler 20 is located between the client device 10 and the database(s) 30 and is equipped with functionality, such as software and/or hardware components, to handle (modification of) complex data records. In some embodiments, the handler 20 is configured or operable as a solver capable of solving complex data record handling tasks, such as in the context of handling a modification of at least one data element of a complex data record. In such context, the handler 20 provides for a logic or processing to reflect/consider the interdependence between the individual data elements of a complex data record. That is, the handler 20 is capable of obtaining a consistent complex data record, i.e. a complex data record in in which the data elements are mutually consistent with or among each other (also after some modification of a data element and possible changes of one or more other data elements in response to such modification).

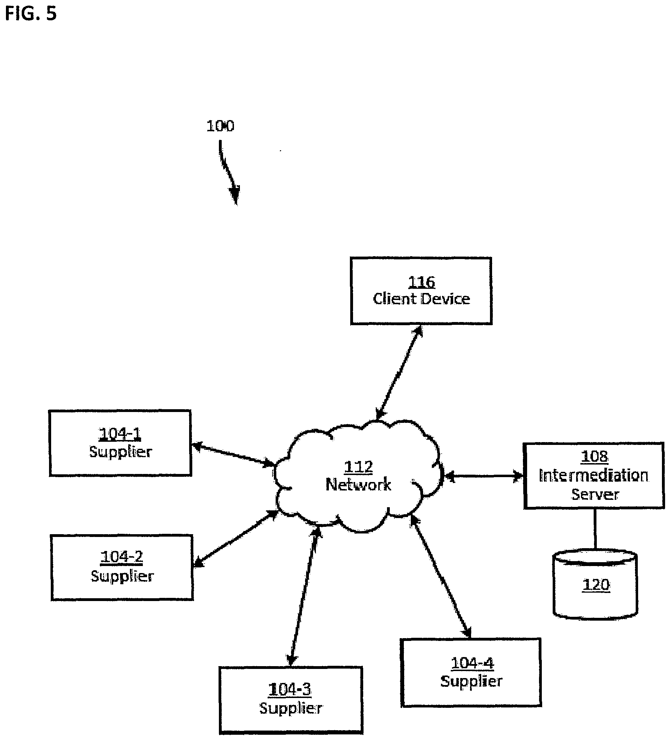

The handler 20 is communicatively coupled to the databases 30 via respective interfaces 6, 7, 8. It is to be noted that three databases and corresponding three interfaces are exemplarily shown in FIG. 1, but this does not limit the number of databases and corresponding interfaces, which may also be two or more than three. The handler 20 may comprise a server with one or more processors and a memory including RAM and/or any further volatile memory, or may comprise any computing or computation device including a memory. The memory may store temporary program data to facilitate the functionality of the handler 20. Further, the memory may store at least one complex data record of/from the client device 10. For example, the handler 20 may be realized or represented by a server and a repository, as illustrated in FIG. 5. In some embodiments, the handler 20 may represent a central/centralized processing entity which may be configured to handle (modification of) complex data records of/from a plurality of client devices 10.

The databases 30 store data which can be retrieved by the handler 20. The data in each of the databases 30 may constitute, represent or build the basis of data elements of complex data records being handled by the handler 20. Each of such data records may be hosted, e.g., generated, handled or stored, by any one of the databases 30. The databases 30 may be separate or coupled to each other. Independently, any database 30 may be reached with a different request and any database may then respond with a response over a respective one of the interfaces 6, 7, 8. Any database 30 may comprise or combined with a computing or computation device. For example, any database may be realized or represented by a supplier subsystem (wherein any such supplier subsystem may be configured to provide for an item corresponding to the respective data element hosted by such database), as illustrated in FIG. 5.

When handling (modification of a) complex data record, the complex data record (subject to modification) may be stored at the client device 10 or the handler 20, i.e. a memory or repository thereof. Accordingly, the handling operations or functionalities as described below may be realized, initiated or controlled by/at the client device 10 or the handler 20, i.e. a server or computing or computation device thereof.

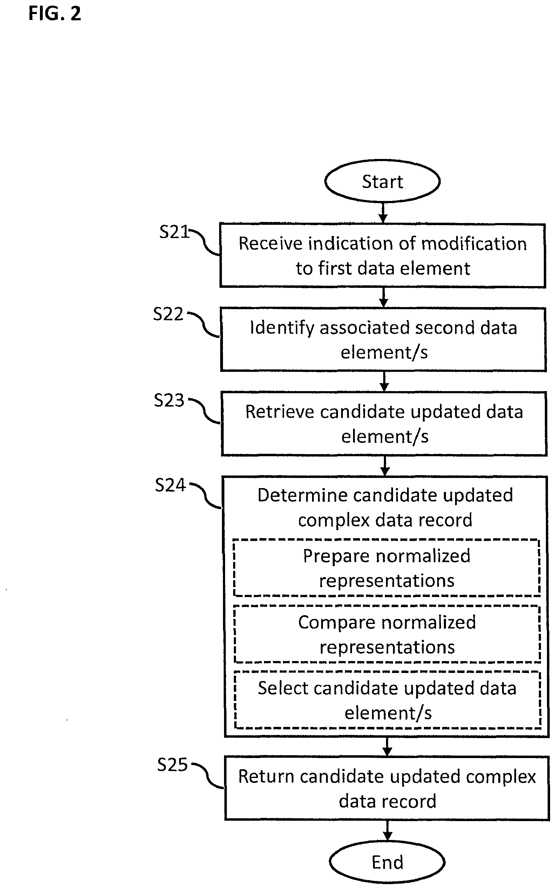

FIG. 2 illustrates a flow diagram of a method for the modification of complex data records. The method of FIG. 2 may be performed or realized by or in a database system, e.g. the system of FIG. 1 or at least part thereof, such as the handler 20. In the following, the method is described under the assumption of an illustrative example of a complex data record comprising data elements of a first type and a second type, wherein the data elements of the first type are hosted by a first database and the data elements of the second type are hosted by a second database.

As shown in FIG. 2, the method comprises receiving (S21) an indication defining a modification to at least a first data element of the data elements of the complex data record stored in a memory of the database system. The indication may be or comprise or be comprised in a request or instruction for modification, e.g. in the case that the modification of the at least first data element has not yet been effected/initiated but is still to be effected/initiated (e.g. by/at a handler or solver), or an information or advice for modification, e.g. in the case that the modification of the at least first data element has already been effected/initiated (e.g. by/at a client device). Further, the method comprises, in response to receipt of the indication, automatically identifying (S22) a number of second data elements of the complex data record which are associated with the first data element subject to the modification, the identified second data elements including at least a first type data element and a second type data element. The first data element subject to the modification may be a data element of first type, second type or another type different from the first and second types. In some embodiments, the identified second data elements include only a first or second type data element or more than one first and/or second type data elements. Further, the method comprises, for each identified second data element, retrieving (S23), via the communication links, a number of candidate updated data elements from the plurality of databases in parallel which also includes retrieving a number of candidate updated first type data elements from the first database and retrieving a number of candidate updated second type data elements from the second database in parallel. In this regard, the term "in parallel" is to mean at least partially simultaneously or concurrently, from a temporal or logical perspective.

Further, the method comprises (S24) determining a candidate updated complex data record based on the retrieved candidate updated data elements including the candidate updated first type data elements and the candidate updated second type data elements. In some embodiments, the determining may comprise preparing normalized representations of the retrieved candidate updated data elements; comparing the normalized representations of the retrieved candidate updated data elements; and selecting, based on the comparing, at least one candidate updated first type data element and at least one candidate updated second type data element to be included in the candidate updated complex data record. In this regard, the normalized representations of the retrieved candidate updated data elements may be prepared on the basis of at least a subset of parameter values of the retrieved candidate updated data elements. Further, the method comprises returning (S25) the candidate updated complex data record.

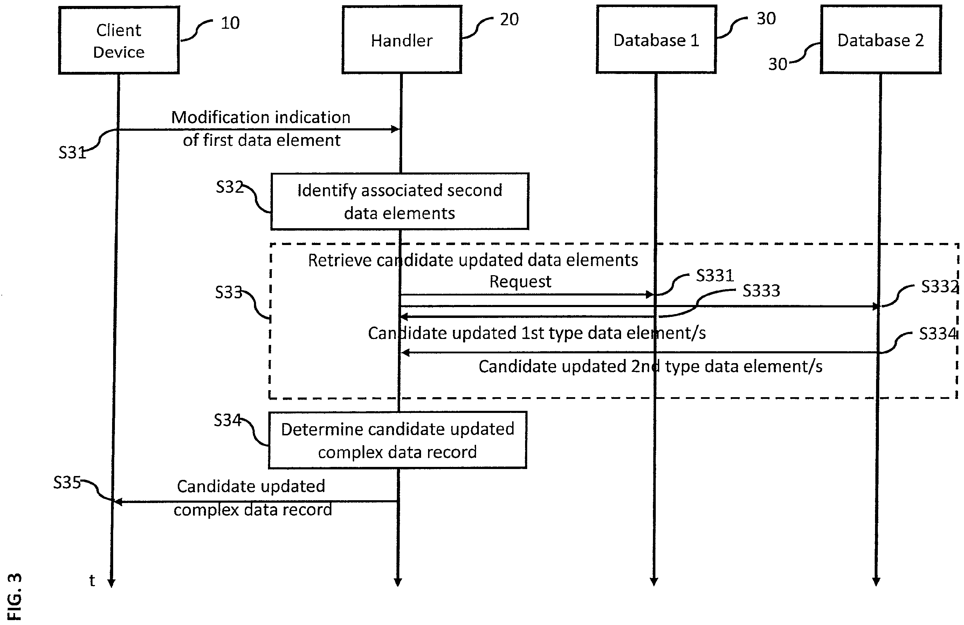

FIG. 3 illustrates a sequence diagram of a procedure for the modification of complex data records. The procedure of FIG. 3 illustrates an example of a flow in a database system corresponding to the system of FIG. 1. In the following, the procedure is described under the assumption of an illustrative example of a complex data record comprising data elements of a first type and a second type, wherein the data elements of the first type are hosted by a first database and the data elements of the second type are hosted by a second database.

As shown in FIG. 3, at S31, the client device 10 sends a modification indication, as an indication defining a modification to a first data element of the data elements of the complex data record, and this modification indication is received by/at the handler 20. Based thereon, the handler 20 controls (or coordinates) an appropriate handling of the complex data record in view of the indication modification. Namely, as described above, the indicated modification to a first data element may, due their interdependencies, require adaptations of one or more of the remaining data elements so as to arrive at an inherently consistent complex data record, in which all of its data elements are consistent with or among each other. Although not shown in FIG. 3, a modification indication may be provided, e.g. from a user (or another entity), to/at the client device 10, and the client device 10 issues its modification indication at S31 based thereon.

At S32, the handler 20 identifies a number of associated second data elements, i.e. one or more second data elements which are associated with the first data element subject to the modification. In the present example, the identified second data elements include at least a first type data element which is hosted by the first database (Database 1) and a second type data element hosted by the second database (Database 2).

At S33, the handler 20 retrieves, for each identified second data element, a number of candidate updated data elements from the plurality of databases in parallel. In the present example, one or more candidate updated first type data elements are retrieved from the first database (Database 1) and one or more candidate updated second type data elements are retrieved from the second database (Database 2). As illustrated in FIG. 3, the retrieving may comprise that a request for the respective candidate updated first/second type data elements is generated at/by the handler 20 and sent to the corresponding database at S331 and S333, and the databases respond to such requests by providing the respective candidate updated first/second type data elements at S332 and S334. Any request may contain data element attributes according to the modification. Namely, depending on the indicated modification to the first data element, the handler 20 may determine one or more attributes which the second data elements (in an updated complex data record) have to or shall meet so as to eventually arrive at an inherently consistent complex data record, in which all of its data elements are consistent with or among each other (again) despite the initial modification to the first data element. Then, the databases are capable of finding and providing appropriate second data elements meeting these attributes. An attribute may be any property, characteristic or content of a data element.

At S34, the handler 20 determines a candidate updated complex data record based on the retrieved candidate updated data elements, here the candidate updated first type data elements and the candidate updated second type data elements. As indicated above, determining a candidate updated complex data record comprises selecting appropriate one/ones of the retrieved one or more candidate updated first type data elements and the retrieved one or more candidate updated second type data elements. In this regard, the handler 20 may apply any scheme or rule for evaluating appropriateness of the retrieved candidate updated first/second type data elements for being included in a (candidate) updated complex data record. For example, if retrieving two candidate updated first type data elements, the handler 20 can select that one candidate updated first type data element which is more consistent with the modified first data element or, in a combined consideration, a sub-/set of (candidate) updated data elements resulting from the modification to the first data element. In more general terms, the handler 20 may, when a plurality of candidate updated first type data elements and a plurality of candidate updated second type data elements are received, determine the candidate updated complex data record by automatically selecting one of the received plurality of candidate updated first type data elements and one of the received plurality of candidate updated second type data elements. When the modification includes one or more modified parameter values of the first data element, the automatic selection may comprise or be based on comparing one or more modified parameter values of the first data element with corresponding parameter values of the received candidate updated data elements.

In determining the candidate updated complex data record at S34, the handler 20 can coordinate the modification to the first data element and the resulting changes of one or more other data elements so as to arrive at an appropriate or even optimal (candidate) complex data record. Accordingly, the handler 20 may be configured to solve a corresponding optimization problem on the basis of the modification to the fist data element and the retrieved candidate updated data elements (and potentially also remaining (unchanged) data elements, which are not associated with the first data element).

In some embodiments, the handler 20 may carry out an optimization (process) in determining the candidate updated complex data record at S34. Such optimization (process) may be based on a value function such that the candidate updated complex data being determined is the one with the extreme (i.e. highest or lowest) value of the value function. In this regard, the handler 20 may calculate a value of/for a (candidate) complex data record by using (e.g. adding) values of its data elements, wherein the values of the individual data elements may be weighed (for prioritization thereof). The result value of the calculation of any value function, which is a composite value resulting from or being composed of a number of potentially weighed values of individual data elements (parameters), may be regarded as a metric of/for the respective complex data record, and the complex data record with the best metric may be selected as the final determination result at S34. Thereby, complex data records can be made comparable using the result values (composite values) as metrics thereof (which represents the complex data records).

By creating an ontology (for the data elements of the complex data record), a comparison and/or classification thereof is enabled, rather than taking a mere e.g. distance there-between. The value function can be based on such ontology, e.g. using constraints in NLP (Natural Language Processing). Various projections (for result output) such as bubbled charts, rotating factors, etc. may be used for/with (different) comparison and/or classification. Hence, common patterns that are shared between the data elements can be extracted and used.

Any one of the data elements (i.e. parameters) of the (candidate) complex data record may be considered as a dimension of the optimization (process) which has or exhibits a given value range. Any retrieved/received data element may have a certain value (e.g. scalar) in its corresponding given value range, wherein the value (with reference to the underlying value range) indicates the appropriateness of the retrieved/received data element. For example, for the candidate updated complex data to be determined, a value of 1 in a value range of 1 to 10 may be most appropriate (i.e. best) for a given data element, and a value of 8 in a value range of 1 to 10 may be appropriate (i.e. good) for another given data element. In such example, the one given data element may be weighed (prioritized) differently from the another given data element, depending on their (actual or intended/desired) significance for the candidate updated complex data to be determined. The value of a data element can be dynamically converted from its semantic. Also, further constraints may be used in the calculation of the value of/for the candidate complex data record to be determined, such as e.g. criteria for determining data elements to be considered/processed.

Accordingly, the determination (and the underlying comparison and/or classification) can be based on a single (type of) data elements or a combination of (types of) data elements (which may be referred to as compound approach).

The value function can be configured by/via the client device 10 (of e.g. a customer or user) or another entity or may be (pre-)configured, e.g. based on (pre-)set preferences, profiles, or the like. Such (pre)-configuration of the value function may include any contents, constraints and/or parameters, such as e.g. ontology, (criteria for determining) data elements to be considered/processed, weights, or the like. That is, the optimization (process) and its underlying data is not hard-coded but can be dynamically configured, e.g. based on domain-specific language or characteristics or, more generally, an understanding of the domain space.

Accordingly, the result space for determining the candidate updated complex data record at S34 can be designed in an optimization (process), such as e.g. on the basis of a value function. Thereby, the retrieved/received data elements can be handled in an effective manner, e.g. in terms of computational power and result accuracy and/or appropriateness.

It is to be noted that similar measures as described above can also be applied for designing the search space or an intermediate space between the search and result spaces in an optimization (process). By application on the search space, various (search) flows can be appropriately scheduled or orchestrated, taking into account that some (search) tasks/problems are more complex than others and thus need more computational time and/or power. Also, various result spaces (of different use cases) can be combined or paired.

The result/s (in the result space) can be or can comprise progressive results and/or be returned (e.g. displayed) in a progressive manner. That is, the results become more precise with the lapse of time (as the search, computation, etc. goes on). Accordingly, a progressive return approach, such as e.g. progressive displaying, of the results can be implemented, wherein the earlier results being returned (e.g. displayed) are coarser and the later results being displayed get gradually more refined or accurate. Depending on preferences (such as e.g. a profile), results may be returned (e.g. displayed) sooner at the expense of accuracy, or better results may be returned (e.g. displayed) at the expense of (waiting/delay) time.

Also, alerting can be based on similar measures in that, for example, a client device (of a customer or user) can be alerted when results are obtained which correspond to a configured set of criteria with a configured weight, which can also be based on a multidimensional comparison and/or classification. In the context of alerting, the aforementioned progressive approach may also be applied. That is, the alerting may be based on a gradually refining result return (where alerting may be triggered when a given degree of refinement is reaches), a varying search/computation (where alerting may be triggered when a result satisfying a varied condition is satisfied), or the like.

At S35, the handler 20 returns the candidate updated complex data record, as determined at S34, to the client device.

Although not shown in FIG. 3, the procedure may comprise various additional operations. For example, the procedure may comprise that, in response to returning the candidate updated complex data record, a selection of one of the candidate updated first type data elements and/or one of the candidate updated second type data elements is received (e.g. from a user or another entity). Based on such automatic selection, the procedure may comprise that an update sequence to update the first database and the second database is determined based on the received selection, and transaction requests are sequentially transmitted, via the communication links, to the first database and to the second database in accordance with the determined update sequence to update the first database and the second database based on the received selection.

As indicated above, the modification indication may be initiated or caused e.g. by a user of the client device 10. In this regard, although not shown in FIG. 3, the procedure may comprise presenting selectable graphical elements corresponding to respective data elements of the complex data record, the graphical elements being representative of one or more parameter values of the data elements of the complex data record, and the modification indication may comprise, represent or be based on a selective operation on one of the graphical elements being representative of the modification to the first data element, e.g. one or more modified parameter values of the first data element. In such context, although not shown in FIG. 3, returning the candidate updated complex data record may comprise updating the graphical elements corresponding to the candidate updated data elements in the candidate updated complex data record.

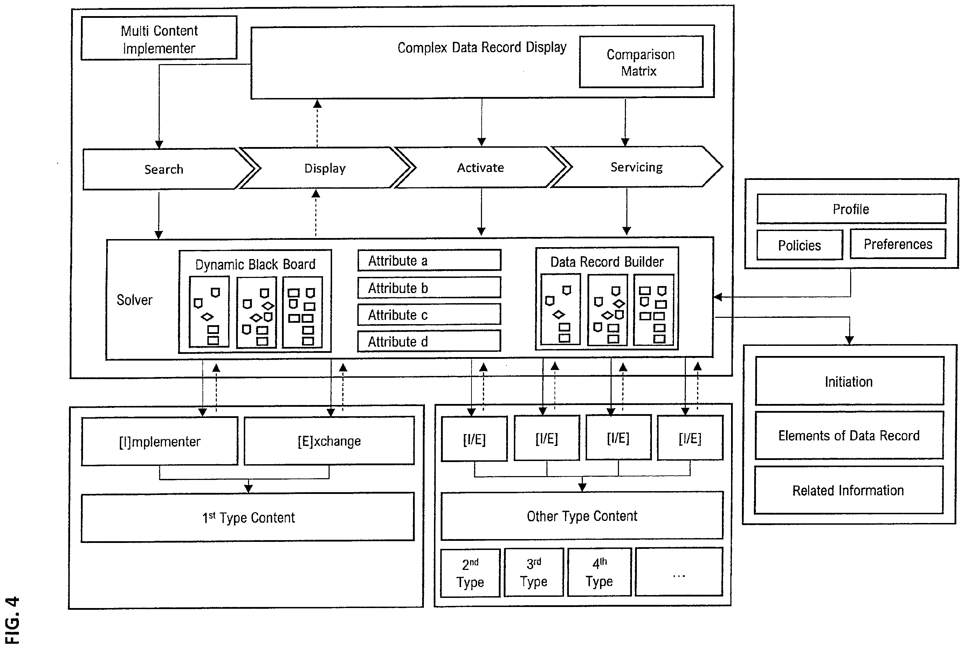

FIG. 4 illustrates a schematic block diagram of a database system capable of modification of complex data records.

As shown in FIG. 4, a multi content implementer, which is capable of implementing a complex data record (i.e. a multi content data record), comprises a solver as a component capable of solving complex data record handling tasks, such as in the context of handling a modification of at least one data element of a complex data record, as described above. In the course of multi content data record implementation, exemplary processes may relate to search, display, activation and servicing, all of which interact between a complex data record display and the solver. In the complex data record display, there may be a comparison matrix as a subcomponent capable of handling display of several returns, such as several returned candidate updated complex data records.

When receiving a modification indication (e.g. from a client device which is not shown in FIG. 4), the multi content implementer, e.g. the solver, can carry out corresponding processes, including identifying a number of associated data elements, retrieving a number of candidate updated data elements, determining a candidate updated complex data record and returning the candidate updated complex data record, as described in more detail above.

In FIG. 4, such processes are indicated by the dynamic black board, the data record builder and the interaction between the solver and the blocks relating to the different types of content or data elements. Namely, the multi content implementer, e.g. the solver, can retrieve candidate updated data elements for data elements associated with the data element/s subject to modification and build an overall updated complex data record, using applicable attributes (where attributes a, b, c and d are exemplarily shown) and data content from corresponding databases. That is, the multi content implementer, e.g. the solver, can provide for a logic or processing to reflect/consider the interdependence between the individual data elements of a complex data record. Hence, the multi content implementer, e.g. the solver, can realize a coordination between the data element/s subject to modification and any other data elements, including those required to be changed accordingly, so as to ensure an inherently consistent updated complex data record, taking into account the interdependence between the individual data elements.

In building the updated complex data record, the multi content implementer, e.g. the solver, can take into account various information (e.g. as biases), such as e.g. a profile, policies, preferences, etc., which are applicable for e.g. the complex data record to be handled, the data element/s subject to modification, an owner of the complex data record to be handled, or the like. Upon building thereof, the updated complex data record can be output (returned), which can comprise initiation thereof, the data elements thereof, related information, or the like.

With respect to the exemplary illustration/configuration of FIG. 4, the multi content implementer and/or the solver can correspond to or realize (the functionality of) a handler or the like, and the blocks below the multi content implementer can correspond to or realize (the functionality of) databases or the like. The multi content implementer and/or the solver can be regarded as, correspond to or realize a centralized entity for (coordinating or integrating or controlling) complex data record handling tasks, such as in the context of handling a modification of at least one data element of a complex data record.

Herein, a complex data record and its data elements (as well as parameter values, attributes, etc. thereof) is generally applicable to any kind of data and any kind of record structure. The present disclosure is thus not limited to any specific kind of data or record structure. Depending on the (field of) application or use case, the approaches and methodologies described herein are applicable for various kinds of data and/or record structures. For example, various embodiments provide for handlers, solvers, intermediation servers or the like, which are capable of reflecting/considering the interdependence between the individual data elements of a complex data record so as to arrive at an inherently consistent complex data record even if one or more data elements thereof are subject to modification, for various kinds of data and/or record structures, respectively.

Some exemplarily (fields of) applications or use cases are described below for facilitating a further understanding of the present approaches and methodologies. Yet, it is to be noted that these examples are given for illustrative purposes only and are neither restrictive nor exhaustive.

A non-limiting example application or use case may relate to a complex database result set indicating or referring to a communication arrangement such as e.g. a network route configuration.

In this example, it is assumed that a complex data record comprises an access point (of an originating client device to a first local or access network) as a first data element, a connection from the access point in the first local or access network to an endpoint in a second local or access network (via a wide-area or transport network) as a second data element, a characteristic for communication on at least part of the connection, such as e.g. a quality-of-service (QoS), a minimum guaranteed bandwidth, etc., as a third data element, and the endpoint (defining an access point of a terminating client device to a second local or access network) as a fourth data element. The first and fourth data elements are of type "communication entity" and may be hosted by one or two related databases (referred to as database A), the second data element is of type "communication link" and may hosted by a related database (referred to as database B), and the third data element is of type "communication property" and may hosted by a related database (referred to as database C).

For example, it may be desired to modify an access point, e.g. to another access point in the same local or access network or in another local or access network (e.g. due to an inter-RAT handover). Based on such modification indication, the database system identifies associated data elements, here the connection and the characteristic, in the complex data record, and may retrieve candidate update data elements for these identified associated data elements. To this end, the database system may request provision of such candidate update data elements from the related databases (database B and database C), respectively. As the modified parameter value of the first data element is the location of the used access point, a corresponding attribute for the candidate update data elements to be retrieved/provided may be included in such requests. As a result of such request, database B may provide a connection from the new/modified access point to the current endpoint in the second local or access network (i.e. first candidate updated first type data element) and a connection from the new/modified access point to an alternative endpoint in the second local or access network (i.e. second candidate updated first type data element), and database C may provide three different characteristics applicable for different connection starting from the new/modified access point (i.e. first to third candidate updated second type data element). Based thereon, the database system may determine a candidate updated complex data record, which may be derived using any suitable scheme, rule, or the like. For example, the database system may select the alternative endpoint in the second local or access network (i.e. second candidate updated first type data element) and the first applicable characteristic (i.e. first candidate updated second type data element), if these are consistent with or among each other (i.e. the thus defined characteristic is applicable for the new connection from the new/modified access point to the alternative endpoint in the second local or access network. In order to arrive at an inherently consistent communication arrangement, the database system may recognize that the fourth data element, i.e. the endpoint in the second local or access network, is to be changed so as to be consistent with the new connection, i.e. the changed second data element. Accordingly, the database system may retrieve and determine a suitable fourth data element and then return the thus resulting determined candidate updated complex data record to the client device.

If the client device confirms the changed communication arrangement according to the candidate updated complex data record, the individual database may be updated (with the newly valid entries), e.g. using transaction requests being sequentially transmitted in accordance with a static (or predefined) or (dynamically) determined update sequence. In such case, the candidate updated complex data record may be regarded as the (final/valid) updated complex data record. Otherwise, if the client device does not confirm, the database system may determine another candidate updated complex data record using the previously retrieved information, potentially taking into consideration the user's feedback (with respect to the previously returned candidate updated complex data record), preferences or requirements (if any).

A non-limiting example application or use case may relate to a complex database result set indicating or referring to a travel arrangement such as an itinerary.

In this example, it is assumed that a complex data record comprises a departing flight as a first data element, a hotel room reservation as a second data element, a rental car reservation during at least part of the stay as a third data element and a returning flight as a fourth data element. The first and fourth data elements are of type "flight" and may be hosted by one or two related databases (of suppliers of the flight, such as e.g. the same or different airlines), the second data element is of type "hotel" and may hosted by a related database (of a supplier of the hotel room, such as a hotel company), and the third data element is of type "rental car" and may hosted by a related database (of a supplier of the rental car, such as a rental car company).

While this example will be described in more detail, using specific terminology for the applicable travel environment, this is not to be construed as an indication or hint that this example might be more preferred and/or better suitable than the above example in the network/communication environment. Also, it is noted that any details or specifics, as set forth in this example, are equally applicable for the basic approach and methodologies of the present disclosure, the above example and any other example application or use case. Those skilled in the art will appreciate when, even if adopting different terminology, the thus related features are corresponding or equivalent to each other.

FIG. 5 illustrates a system 100 for the modification of complex data records. The system 100 includes a set of supplier subsystems 104, of which four examples 104-1, 104-2, 104-3, and 104-4 are shown. In other examples greater or lesser numbers of supplier subsystems 104 can be included in the system 100. Each supplier subsystem 104 can be operated by a corresponding supplier or supplier entity responsible for the provision of items, such as goods and/or services, to client devices (of e.g. customers or users). The specific nature of the items provided by the suppliers is not particularly relevant. In the examples below, the items are assumed to be travel-related services (e.g., flights, hotel rooms, vehicle rentals, and the like). Each supplier subsystem 104 is therefore configured to store and process a variety of data defining the items provided by the corresponding supplier entity. Each supplier subsystem may thus correspond to or comprise a database for hosting corresponding data elements regarding the item/s provided by the supplier entity thereof, as described above.

More generally, the items provided by the supplier entities are often procured by or for a given client device in an interdependent arrangement that may not be reflected in the data stored at the supplier subsystems 104. For example, a client device may obtain a variety of travel services for a given trip, such as departing and returning flights, hotel reservations, car rentals, and the like. However, although the above-mentioned items are interdependent from the perspective of the client device, each item may be provided by a distinct supplier, with no regard to the provision of the other items. That is, each supplier subsystem 104 need not contain any data defining such interdependencies. Further, the procurement of each item in an itinerary may involve distinct interactions with each supplier subsystem 104, involving the use of distinct communication protocols, message formatting and content rules, transaction workflows, and the like.

To alleviate the complexity of such distinct interactions with supplier subsystems 104, the system 100 also includes an intermediation server 108, connected with the supplier subsystems 104 via a network 112 (e.g., any suitable combination of local and wide-area networks). The intermediation server 108 is configured to receive requests from, and provide data to, a client device 116 which may be operated by a customer or user (i.e., a traveler in the examples discussed herein) or by a travel agent (also referred to as a seller) on behalf of the traveler. The client device 116, therefore, need only be configured to interact with the intermediation server 108, and the various distinct mechanisms involved in communicating with the supplier subsystems 104 are managed at the intermediation server 108 itself.

The intermediation server 108 can also access, e.g., via local memory at the intermediation server 108 itself, or via storage device(s) accessible via the network 112, a repository 120. The intermediation server 108 can generate and store one or more data records containing data (i.e. data elements) defining the above-mentioned items procured on behalf of the traveler associated with the client device 116. A given one of the above-mentioned data records, referred to in the examples below as a travel itinerary, can be stored in the repository 120, and contains data (i.e. data elements) defining each of a plurality of itinerary components. For example, a travel itinerary can contain distinct components (corresponding to data elements) for flights, hotel room reservations, and the like. As will be apparent to those skilled in the art, the centralized storage of the travel itinerary in the repository 120 combines data sources from different supplier subsystems 104. The repository 120 may also contain various other information, including profile data corresponding to the traveler. The intermediation server or the combination of the intermediation server and the repository may thus correspond to or comprise a handler or solver for handling complex data records, as described above.

In some circumstances, modifications to the itinerary (or any other set of interdependent items or data elements in non-travel examples) may be desired. For example, a change in a planned return date may necessitate a later return flight. In other cases, a component of the itinerary may be changed by the supplier of that component. For example, a supplier may cancel or reschedule the above-mentioned return flight. As noted above, the components of the itinerary are interdependent, such that the later return flight may also affect the desired duration of a hotel reservation, vehicle rentals, transportation to and/or from an airport, and the like.

A modification such as a change in date of a return flight can be initiated by the client device 116, in the form of a request to the intermediation server 108. Given that the supplier subsystems 104 are independent of one another, the supplier subsystems 104 generally are not configured to detect the above-mentioned interdependencies. As a result, an operator of the client device 116 may inadvertently submit update requests to a given supplier subsystem 104 (via the intermediation server 108) that conflict with the practical interdependencies noted above, because those interdependencies are not explicitly indicated in the travel itinerary stored in the repository 120. One update may therefore necessitate further updates to other components of the itinerary, e.g., to resolve conflicts introduced by the first update. Such a piecemeal approach to modifying the itinerary is inefficient and error-prone, and may therefore be costly in terms of communication bandwidth between the various entities of the system, as well as the computational resources of those entities. Further, modifying the structure and/or content of the repository 120 and the supplier subsystems 104 to explicitly reflect the above-noted interdependencies may be prohibitively costly, particularly given the scale of the supplier subsystems 104 and intermediation server 108 (which may each handle thousands or tens of thousands of incoming requests per hour).

As will be discussed in greater detail below, the client device 116 and the intermediation server 108 therefore also implement functionality to automatically detect and present real-world interdependencies that are not defined in the travel itinerary as stored in the repository 120. Further, the functionality mentioned above enables the initiation of multiple modification (or transaction) requests (e.g., to distinct supplier subsystems 104) as a set, according to the detected interdependencies. As a result, the client device 116 and intermediation server 108 may cooperate to reduce the incidence of conflicting and/or erroneous (and therefore wasteful in terms of system resources) updates to the travel itinerary.

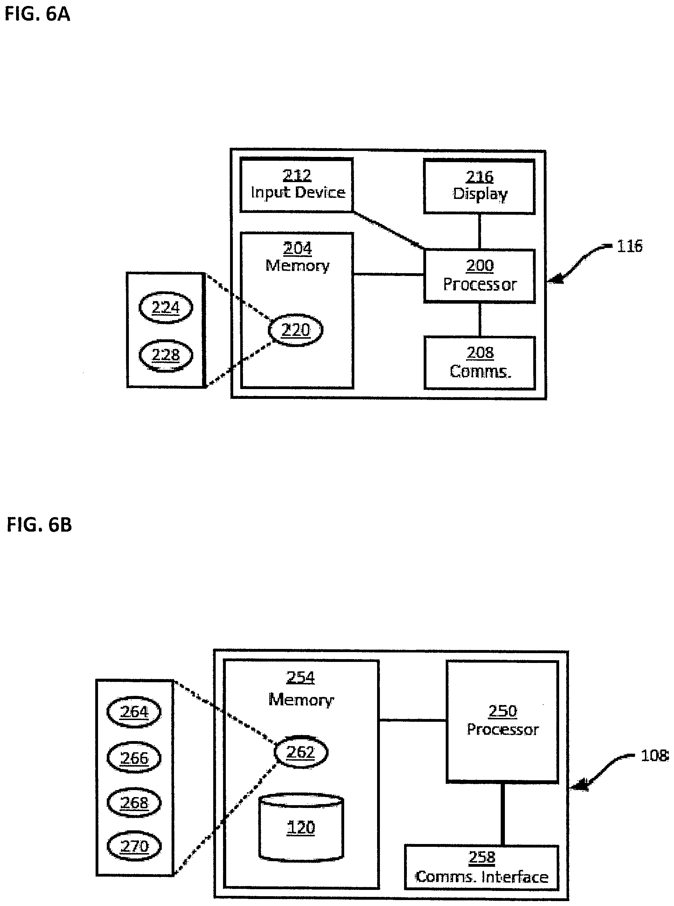

Before discussing the operation of the system 100 in greater detail, certain internal components of the client device 116 and the intermediation server 108 will be described, with reference to FIGS. 6A and 6B.

Referring in particular to FIG. 6A, the client device 116 includes at least one processor 200, such as a central processing unit (CPU) or the like. The processor 200 is interconnected with a memory 204, implemented as a suitable non-transitory computer-readable medium (e.g., a suitable combination of non-volatile and volatile memory subsystems including any one or more of Random Access Memory (RAM), read only memory (ROM), Electrically Erasable Programmable Read Only Memory (EEPROM), flash memory, magnetic computer storage, and the like). The processor 200 and the memory 204 are generally comprised of one or more integrated circuits (ICs).

The processor 200 is also interconnected with a communications interface 208, which enables the client device 116 to communicate with the other computing or computation devices of the system 100 via the network 112, including the intermediation server 108. The communications interface 208 therefore includes any necessary components (e.g., network interface controllers (NICs), radio units, and the like) to communicate via the network 112. The specific components of the communications interface 208 are selected based on upon the nature of the network 112.

The client device 116 also includes an input device 212, such as a keyboard, touch screen, mouse, or the like, and a display 216 controllable by the processor 200 to render various information, e.g., stored in the memory 204. The client device 116 can also include other output devices in addition to the display 216 in some examples, such as a speaker, or the like. The components of the client device 116 mentioned above can be implemented as a tablet computer, desktop computer, smart phone, or the like.

The memory 204 stores a plurality of computer-readable programming instructions, executable by the processor 200, in the form of various applications, including an itinerary modification application 220. As will be understood by those skilled in the art, the processor 200 executes the instructions of the application 220 (and any other suitable applications) in order to perform various actions defined by the instructions contained therein. In the description below, the processor 200, and more generally the client device 116, are said to be configured to perform those actions. It will be understood that they are so configured via the execution (by the processor 200) of the instructions of the applications stored in memory 204.

Execution of the application 220 configures the client device 116 to receive and present a travel itinerary from the intermediation server 108, and to receive input data (e.g., via the input device 212) defining a modification to one or more components of the itinerary. The application 220 further configures the client device 116 to automatically detect additional affected components, i.e. associated components, of the itinerary based on the above-mentioned modification, and to generate a set of requested modifications for processing by the intermediation server 108 accordingly. In the present example, the application 220 includes distinct functional elements in the form of a content handler 224, and a renderer 228. The content handler 224 configures the client device 116 to receive the above-mentioned input data, and detect interdependencies. The renderer 228, meanwhile, configures the client device 116 to generate graphical elements on the display 216 representing the itinerary and modifications thereto.

In other examples, the content handler 224 and renderer 228 can be implemented as distinct applications, or the functionality provided thereby can be implemented by a different combination of applications or application elements. In some examples, the application 220 can be served to the client device 116 as a web-based application from the intermediation server 108.

Turning to FIG. 6B, the intermediation server 108 includes at least one processor 250, such as a central processing unit (CPU) or the like. The processor 250 is interconnected with a memory 254, implemented as a suitable non-transitory computer-readable medium (e.g., a suitable combination of non-volatile and volatile memory subsystems including any one or more of Random Access Memory (RAM), read only memory (ROM), Electrically Erasable Programmable Read Only Memory (EEPROM), flash memory, magnetic computer storage, and the like). The processor 250 and the memory 254 are generally comprised of one or more integrated circuits (ICs).

The processor 250 is also interconnected with a communications interface 258, which enables the intermediation server 108 to communicate with the other computing or computation devices of the system 100 via the network 112, including the client device 116 and the supplier subsystems 104. The communications interface 258 therefore includes any necessary components (e.g., network interface controllers (NICs), radio units, and the like) to communicate via the network 112. The specific components of the communications interface 258 are selected based on upon the nature of the network 112. The intermediation server 108 can also include input and output devices connected to the processor 250, such as keyboards, mice, displays, and the like (not shown).

The components of the intermediation server 108 mentioned above can be deployed in a single enclosure, or in a distributed format. In some examples, therefore, the intermediation server 108 includes a plurality of processors, either sharing the memory 254 and communications interface 258, or each having distinct associated memories and communications interfaces.

The memory 254 stores a plurality of computer-readable programming instructions, executable by the processor 250. The instructions stored in the memory 254 include an itinerary management application 262. The application 262 is configured to provide data records such as travel itineraries to the client device 116, and to effect modifications to the itineraries based on commands received from the client device 116. To that end, the application 262 includes a set of interfaces enabling interaction with the supplier subsystems 104. Thus, in the present example, the application 262 includes interfaces 264, 266, 268, and 270, corresponding to the supplier subsystems 104-1, 104-2, 104-3, and 104-4, respectively. In other examples, the system 100 can include other components that interact directly with the supplier subsystems 104, such as aggregators and the like, and the intermediation server 108 may interact with those other components instead of, or in addition to, interacting directly with the supplier subsystems 104. The interfaces 264-268, in other words, need not be implemented solely at the intermediation server 108, but can be implemented elsewhere in the system 100. In further examples, the interfaces need not be implemented in a one-to-one relationship with the supplier subsystems 104. Instead, for example, the intermediation server 108 can include a distinct interface for each type of supplier subsystem 104, e.g., based on the type or class of items provided by the corresponding supplier.

The memory 254 also stores the repository 120 in the illustrated example. As noted earlier, in other examples the repository 120 can be stored at a distinct computing or computation device or other network-accessible storage device, rather than in local memory 254 at the intermediation server 108.

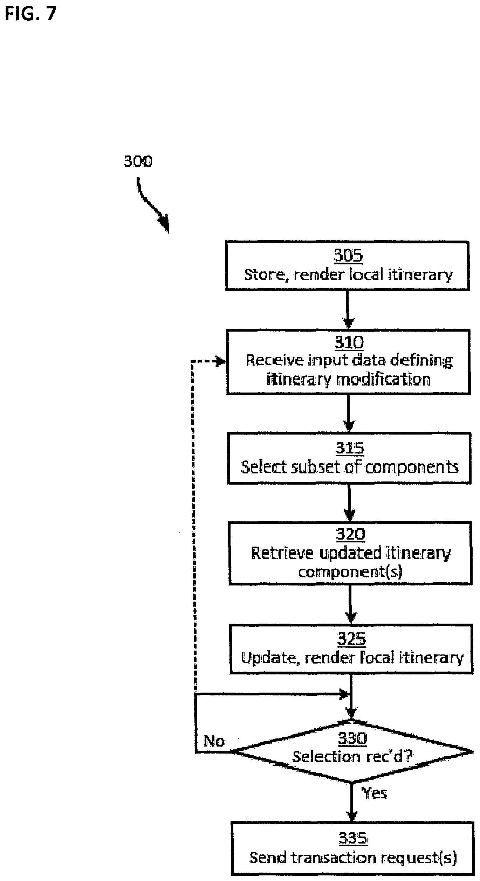

Turning to FIG. 7, a method 300 of modifying data records such as the above-mentioned travel itinerary is illustrated. The method 300 will be described in conjunction with its example performance in the system 100. Specifically, the blocks of the method 300 as described below are performed by the client device 116, in cooperation with the intermediation server 108.

At block 305, the client device 116 is configured to obtain a copy of a travel itinerary, and store the itinerary in the memory 204. The itinerary can be obtained by generation and transmission, by the application 220, of a request to the intermediation server 108 for the itinerary. The client device 116 (and more specifically, the renderer 228) is then configured to render the above-mentioned local copy of the itinerary.

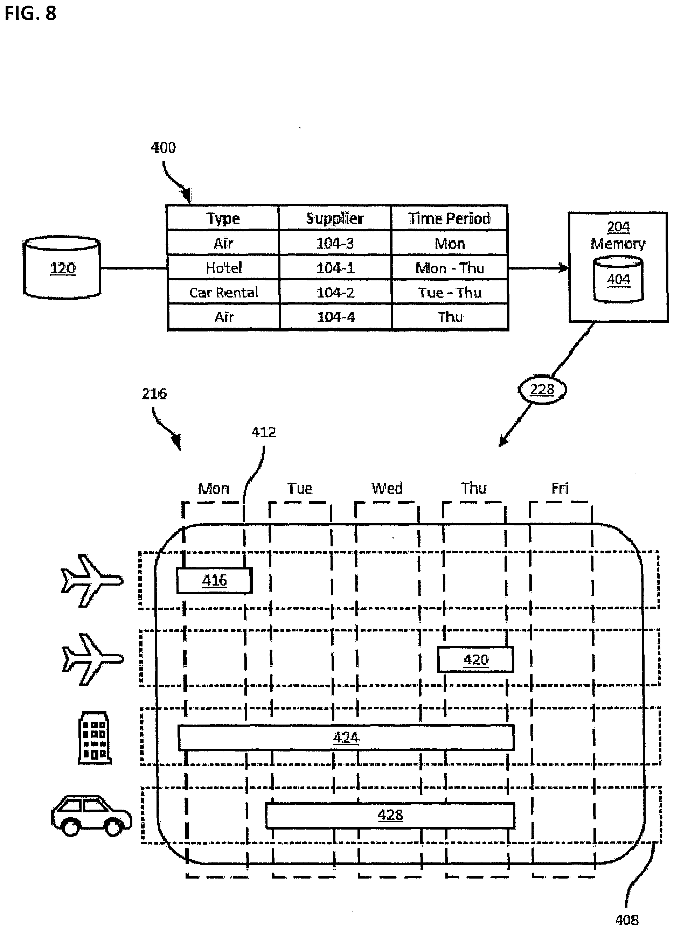

FIG. 8 illustrates an example performance of block 305. In particular, the client device 116 receives a travel itinerary 400 from the repository 120, via the intermediation server 108. The itinerary defines a plurality of components, each shown as rows in a table in FIG. 8. As will be apparent, the components can be defined in a variety of other formats, and the tabular format of FIG. 8 is used purely for illustrative purposes.

Each component defined by the itinerary includes at least a type, indicating a class of item (e.g., "Air", indicating a flight, or "Hotel", indicating a hotel reservation). Each component also includes a time period, indicating a date and/or time during which the corresponding service is to be delivered. Although the time periods shown in FIG. 8 simply list weekdays, in other examples specific dates and/or times can be included. As seen in FIG. 8, certain component types include variable durations with distinct start and end points (e.g., hotel and car rental type components), while other component types include fixed durations defined with a single date and/or time (e.g., air components). In practice, all components may include start and end times, however, certain components, such as air travel components, may have fixed durations that are beyond the control of the client device 116 or the intermediation server 108, and are therefore represented without distinct start and end times.

The itinerary 400 can also include a supplier identifier for each component, indicating which supplier subsystem 104 is responsible for the provision of the corresponding item. As will be apparent to those skilled in the art, the itinerary 400 may include a wide variety of additional information, including traveler identification (e.g., names, travel document identifiers, and the like), location information (e.g., departure and arrival airports for flights), and the like. Such information is omitted from FIG. 8 for brevity.

Having received the itinerary 400, the client device 116 stores a local copy 404 of the itinerary 400 in the memory 204. As will be discussed below, the local copy 404 of the itinerary may be updated to enable the detection and rendering of potential modifications to the itinerary 400, without corresponding modifications to the itinerary 400 as stored at the intermediation server 108.

The client device 116 further renders the itinerary on the display 216. For example, the itinerary can be rendered in a grid including a first set of regions 408 (extending horizontally in the illustrated example) each corresponding to a distinct supplier 104, and a second set of regions 412 (extending vertically in the illustrated example) intersecting with the regions 408. The regions 412 correspond to adjacent times and/or dates. Each component of the itinerary is rendered within the region 408 corresponding to the relevant supplier subsystem 104, and within the region or regions 412 corresponding to the defined time period for the component.

Thus, in the example of FIG. 8, the renderer 228 generates four graphical elements 416, 420, 424, and 428 corresponding to the four components defined in the itinerary 400. The graphical element 416 corresponds to a departing flight defined in the first row of the itinerary 400, while the graphical element 420 corresponds to a returning flight defined in the last row of the itinerary 400. The graphical element 424 corresponds to a hotel stay, extending over four days, as defined in the second row of the itinerary 400. Finally, the graphical element 428 corresponds to a car rental, extending over three days, as defined in the third row of the itinerary 400.

Each graphical element shown in FIG. 8 can also contain additional information from the itinerary 400, such as supplier identifiers, costs, times of departure or arrival, check-in and check-out times, and the like. As will be apparent, the arrangement of the regions 408 in the rendering is not particularly limiting. In other examples, the regions corresponding to the departing and returning flights need not be adjacent to one another, for example. The additional information noted above may be displayed within the boundaries of the corresponding graphical element, and/or may be revealed upon receipt of a further input, such as via selection of a drop-down or expansion element, via a tool-tip, or the like.

Returning to FIG. 7, at block 310 the client device 116 (particularly, the content handler 224) is configured to receive input data defining a modification to a component of the itinerary as rendered at block 305. Each of the graphical elements 416, 420, 424, 428 are selectable via the input device 212, and the input data can therefore include both a selection of a given graphical element, and a modification of the selected graphical element. The modification can include a movement of the selected graphical element. When the selected graphical element corresponds to an itinerary component with a selectable duration (e.g., with defined start and end points in FIG. 8), the modification can include, instead of or in addition to a movement, a duration change. For instance, the graphical element 424 can be modified by shifting both the start and end points of the corresponding time period by an equal amount of time, or by moving the start and end points relative to one another. The graphical elements 416 and 420, in contrast, can only be moved, as they do not have user-selectable durations.

In other examples, the receipt of input data by the content handler 224 can include receiving a modification of a component of the itinerary from the intermediation server 108 or another device in the system 100. For example, as noted earlier, modifications to itinerary components may be initiated by the suppliers 104 under certain conditions. A supplier 104 may, for example, reschedule a flight and inform the intermediation server 108 of the modification. The intermediation server 108, in turn, may provide an updated itinerary to the client device 116, including the modified component resulting from the above rescheduling (or other change, such as a cancellation, or the like). The input data, in other words, need not be provided by an operator of the client device 116 via the input device 212.

In some examples, upon receiving the modification at block 310, the client device 116 can proceed directly to block 315 before updating the rendering on the display 216. In other examples, the modification can be rendered substantially in real-time, prior to performing block 315.

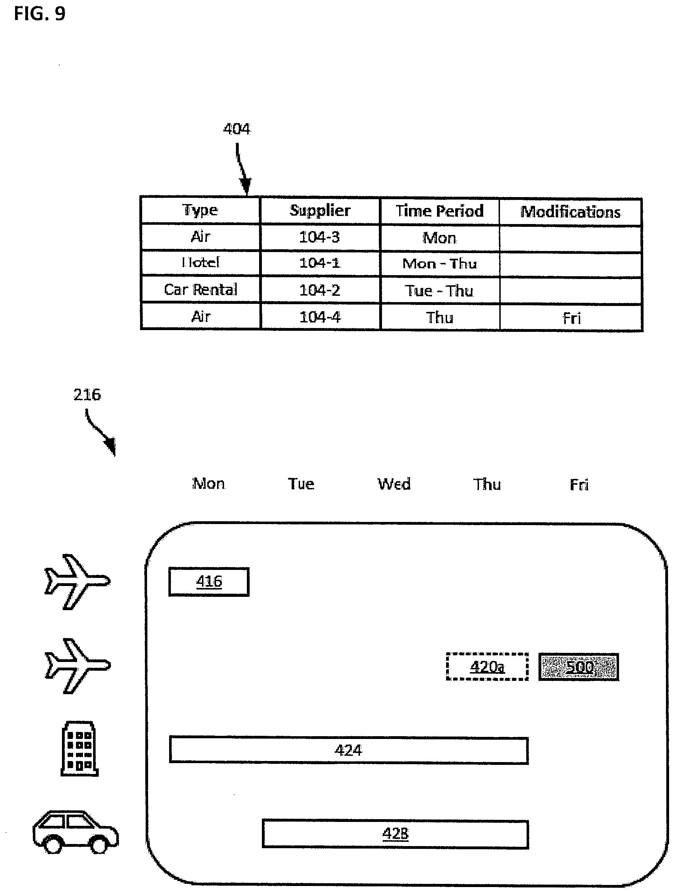

Turning briefly to FIG. 9, it is assumed that in an example performance of block 310, a selection of the graphical element 420 was received, and the graphical element 420 was moved from the region 412 corresponding to Thursday to the region 412 corresponding to Friday. In other words, the modification received at block 310 is a delay of a returning flight of the itinerary 400 by one day. The renderer 228 can be configured to update the display 216 to present a graphical element 420a in place of the element 400, indicating the original position of the return flight (which also corresponds to the current return flight in the itinerary 400, which has not been modified), and to also present a graphical element 500 indicating the modification position (e.g., the modified time period) of the return flight. The client device 116 is also configured to update the local itinerary 404 (notably, without necessarily updating the itinerary 400 in the repository 120) to store the modification received at block 310. Various mechanisms are contemplated for storing the modification. In the example illustrated in FIG. 9, the local itinerary 404 can include a modifications portion (e.g., an additional column, as shown in FIG. 9) for each component. Each component can therefore be defined at least by the original content received from the intermediation server 108, and modified content resulting (initially, at least) from input data at the client device 116.

The graphical element 500 can be distinguished visually from the graphical elements 416, 420a, 424, 428, e.g., by color, fill pattern, or the like, to indicate its nature as a modification rather than an original component.

Returning to FIG. 7, having received the modification at block 310, the content handler 224 is configured to select a subset of the components (which may range from zero to all components of the itinerary aside from the component modified at block 310). The subset contains any components that are associated, here e.g. temporally associated, with the modified component from block 310. In the present example, temporal association includes a time period that overlaps with the time period of the modified component, or occurs in the future relative to the modified component. That is, if the original time period for a modified component falls within the same region 412 as the time period for another component, the other component is considered to be temporally associated with the modified component.

For components with selectable durations, overlap may be evaluated with respect to the start and end points specifically, without considering intermediate days, in some examples. That is, if the itinerary includes a component such as a theatre event on the Tuesday, and that event is modified to appear on the Wednesday instead, the graphical element 424, corresponding to the hotel stay, may not be considered temporally associated with the theatre event, because neither the starting point (Monday) nor the endpoint (Thursday) of the graphical element 424 are on the Tuesday.

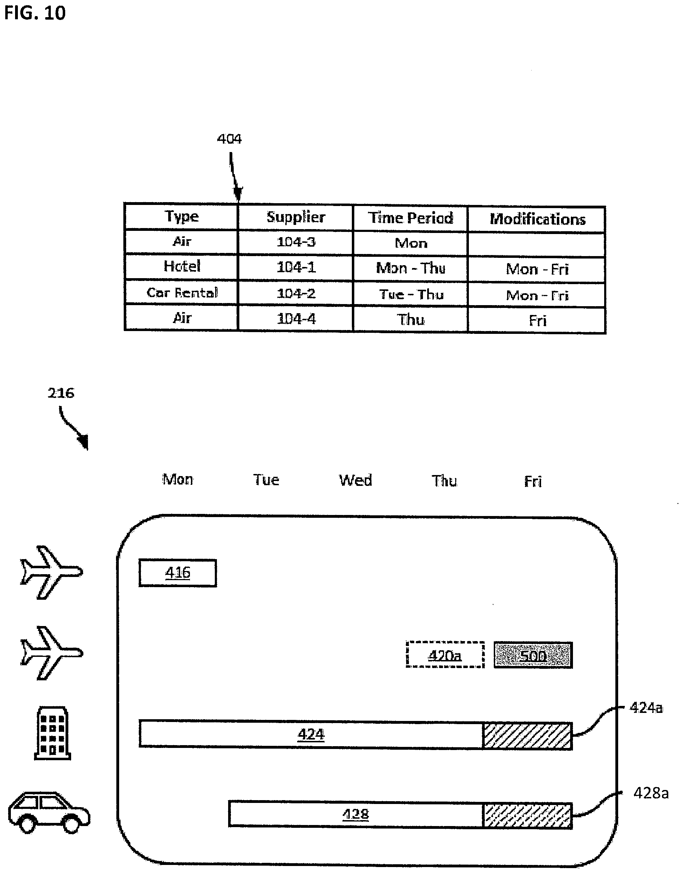

Turning to FIG. 10, a further updated local itinerary 404 and display 216 are shown following the performance of block 315. In particular, the graphical elements 420 / 420a (i.e., the original time period for the return flight modified at block 310) overlap with the endpoints of both the graphical elements 424 and 428. In other words, the return flight is temporally associated with the hotel reservation and the car rental. Of particular note, however, the temporal association is not indicated in the itinerary 400.

The subset of components selected at block 315, in this example, therefore includes the components corresponding to the graphical elements 424 and 428. The renderer 228 can also be configured to replace or supplement the graphical elements 424 and 428 with additional graphical elements 424a and 428a, indicating that the graphical elements 424 and 428 are temporally associated with the element 420. The additional elements 424a and 428a further indicate proposed modifications to the corresponding components. For example, the client device 116 can be configured to propose modifications to the temporally associated elements that would maintain the temporal associations. Thus, the original elements 420 and 424 are associated because the time period of the element 420 is in the same region 412 as the endpoint of the element 428. The proposed modification represented by the element 424a therefore relocates the endpoint of the element 424 to the Friday (coincident with the time period of the modified element 500). Proposed modifications can be rendered with distinct visual attributes from user-modified elements (e.g., the element 500 in this case). As also seen in FIG. 10, the local itinerary 404 has been updated to include the proposed modifications to the elements 424 and 428.

Returning to FIG. 7, at block 320, having selected the subset of temporally associated components at block 315, the client device 116 (e.g., the content handler 224) is configured to retrieve updated itinerary components corresponding to either or both of the modified component from block 310 and the related components selected at block 315.

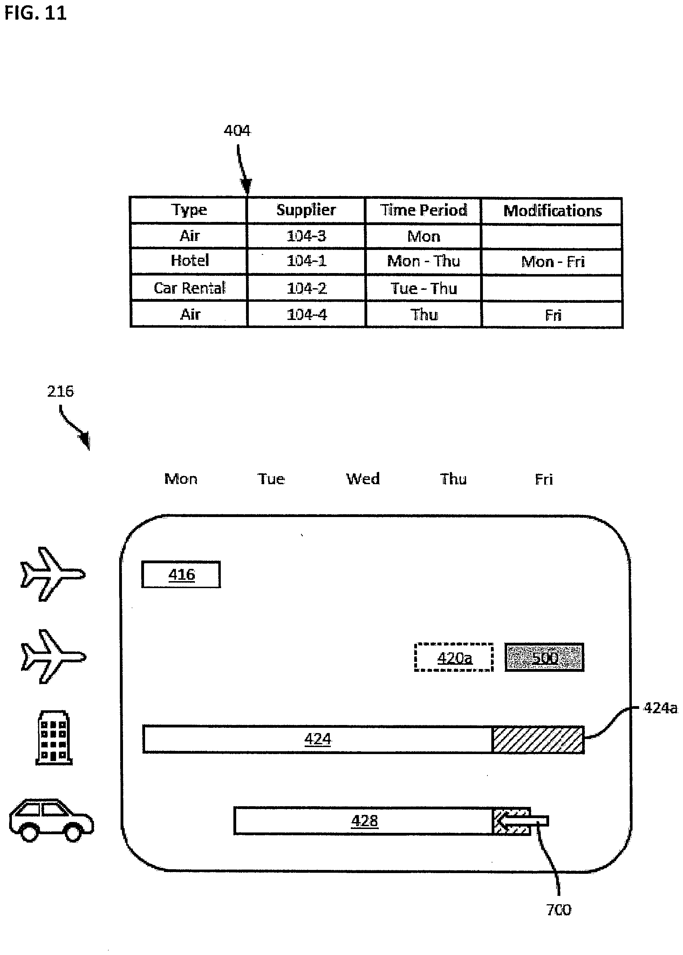

In some examples, prior to advancing to block 320, the client device 116 can await a command, e.g. in the form of input data received at the input device 212, the expiry of a predefined time period (e.g., two seconds) or the like, to proceed to block 320. In such examples, the client device 116 may therefore receive additional input data modifying other components of the itinerary, or modifying the proposed modifications from block 315. For example, turning to FIG. 11, an updated rendering of the local itinerary 404 on the display 216 is illustrated, in which further input data shortening the element 428a to return the car rental component to its original length is shown as a gesture 700. As a result, the modification corresponding to the element 428 previously stored in the local itinerary 404a has been removed. In other words, the automatically-detected temporal association between the elements 420 and 428 has been broken.

At block 325, the client device 116 is configured to obtain the updated itinerary components via the interfaces 264-270 mentioned earlier in connection with FIG. 6B. For example, the client device 116 can transmit a request to the intermediation server 108 identifying the components of the itinerary to be modified, and attributes defining the desired modifications. For example, the attributes included in the request can include the revised time period (e.g. as shown in FIG. 11) for each affected itinerary component. The intermediation server 108, in turn, can generate separate requests for each relevant supplier subsystem 104 via the interfaces 264-270.

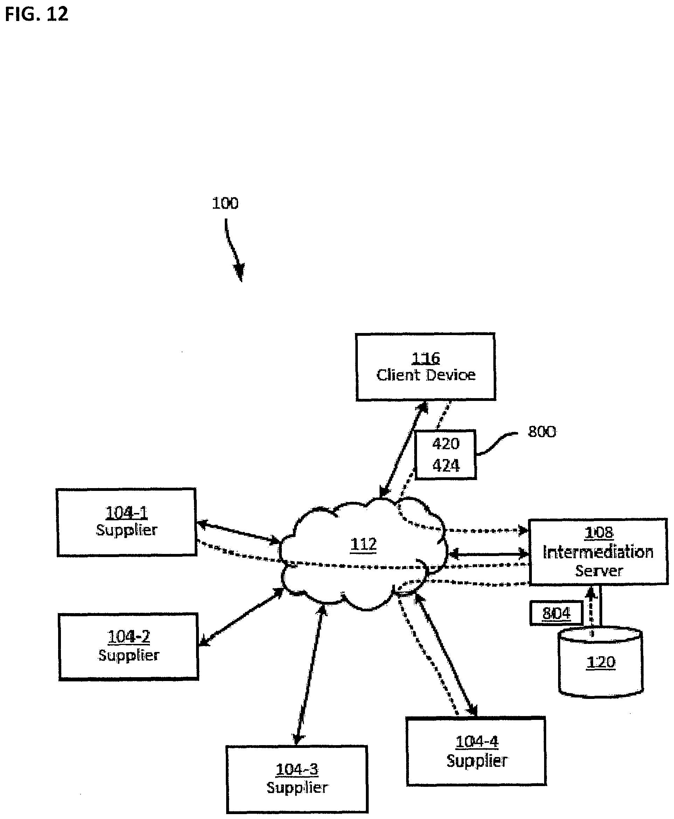

Turning to FIG. 12, an example performance of block 325 is illustrated. In particular, the client device 116 transmits a request 800 identifying the elements 420 and 424, and containing the above-mentioned attributes, to the intermediation server 108. The intermediation server 108, in turn, exchanges one or more messages with the corresponding supplier subsystems 104-1, and 104-4 to retrieve candidate updated itinerary components that satisfy the attributes. The candidates can include modifications to the original components (e.g., in the case of the hotel reservation), or replacement components (e.g., in the case of the moved return flight). In other examples, the intermediation server 108 need not limit the retrieval of candidate updated itinerary components to the same supplier subsystems 104 as those responsible for the original components. That is, the intermediation server 108 can be configured to contact the supplier subsystem 104-3 as well as the supplier subsystem 104-4 to obtain candidate updated itinerary components for the return flight.

In some examples, the intermediation server 108 can also be configured to retrieve profile data 804 corresponding to the traveler and/or other entity associated with the client device 116 from the repository 120. The profile data 304 can include preferred suppliers, preferred travel times, loyalty program membership numbers, or the like.

In response to requests to the supplier subsystems 104, the intermediation server 108 is configured to receive one or more updated itinerary components for each of the modified components in the request 800. The intermediation server 108 can simply pass each candidate updated component back to the client device 116 in some examples. In other examples, the intermediation server 108 can rank or otherwise sort the candidate updated components, when more than one candidate is received for a given modified component. For example, the intermediation server 108 can rank the candidates for a given modified component by price, and/or by any other suitable factor, e.g. whether each candidate satisfies preferred attributes indicated in the profile data 804. The intermediation server 108 can be configured to select and return only a subset of candidate updated itinerary components to the client device 116 (e.g., the three best matches, or the like). In other words, the intermediation server 108 is configured to obtain candidate itinerary components, and assess the value of those candidate components, e.g., relative to the profile data 304 mentioned above, in order to return one or a set of candidates likely to be selected for booking by the traveler. In this regard, the intermediation server can be configured to apply an optimization (process) to select and return a subset of candidate updated itinerary components, which represents an appropriate or even optimal (candidate) itinerary. For optimization, a value function can be applied, by way of which metrics for different (candidate) itineraries can be calculated on the basis of respective values of the updated itinerary components, potentially considering a weighing (prioritization) of the updated itinerary components.

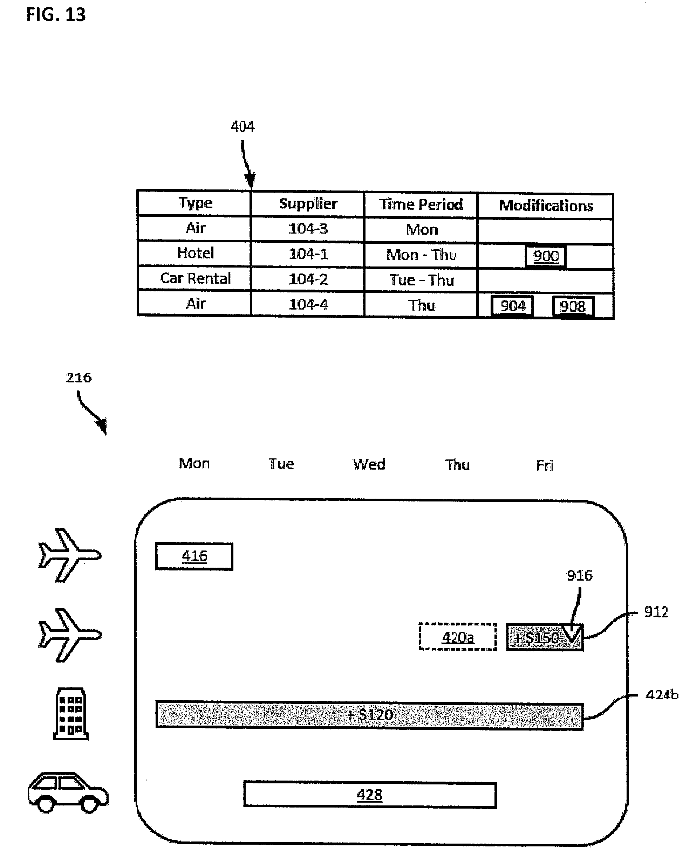

Upon receiving the updated itinerary components from the intermediation server 108, the client device 116 is configured to store the updated itinerary components in the local itinerary 404. Turning to FIG. 13, an updated version of the local itinerary 404 is illustrated in which one updated candidate itinerary component 900 is stored in connection with the hotel reservation, and two updated candidate itinerary components 904 and 908 are stored in connection with the return flight component. As will be apparent to those skilled in the art, the candidate itinerary components 900, 904, and 908 can each include time periods, prices, and the like. The candidate itinerary components 900, 904, and 908 are, in other words, itinerary components stored within the original itinerary components in the local itinerary 404.

The renderer 228 can also be configured to update the display 216 to render at least some of the candidate itinerary components 900, 904, and 908. In particular, as shown in FIG. 13, a graphical element 424b corresponding to the component 900 is illustrated as a replacement to the element 424. In addition, a graphical element 912 corresponds to one of the candidate components 904 and 908 (e.g., the component with the lowest price, or the like). Where multiple candidates are received for a given component, the renderer 228 can select one of the candidates for display, e.g. randomly or based on some scheme or rule, e.g., a degree to which the candidates match user profile data. When multiple candidates are available for a given component, the renderer 228 can also generate a selectable element 916, such as a drop-down menu element, an expansion element, or the like, or an indication that hovering over the element 916 will render a tool-tip. In general, the element 916 or alternatives thereto indicate that additional candidate components are available. Selecting the element 916 causes the renderer 228 to generate a drop-down listing each of the candidate components 904 and 908, from which one of the candidate components can be selected for display. Each of the displayed graphical elements 912 and 424b can include information such as price differences (as illustrated in FIG. 13) relative to the original components 420 and 424.

Referring again to FIG. 7, at block 330 the client device 116 is configured to determine whether a selection of one or more candidate updated itinerary components has been received. A selection, e.g., received at the input device 212, defines a command to book the selected candidate component(s), thus updating the original itinerary 400 in the repository 120. When the determination at block 330 is negative, the client device 116 awaits a selection (e.g., repeating the determination at block 330). Further modifications may also be received as described above in connection with block 310, initiating a repetition of the process of selecting other affected components and obtaining further candidate updated itinerary components.

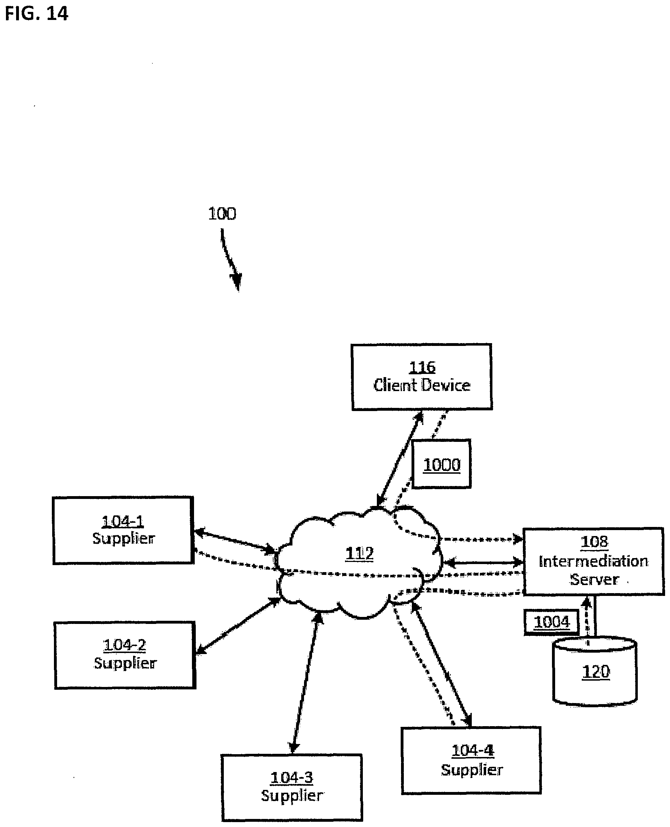

When the determination at block 330 is affirmative, at block 335 the client device 116 generates and sends a transaction request to the intermediation server 108. The transaction request, in general, instructs the intermediation server 108 to initiate any suitable sequence of communications with the relevant supplier subsystems 104 to modify the itinerary 400 (i.e., to rebook certain portions of the itinerary 400). As shown in FIG. 14, responsive to a selection and/or confirmation input received at the client device 116, the client device 116 generates and sends a transaction request 1000 to the intermediation server 108, containing at least identifiers of the selected candidate components (i.e., the candidate components rendered on the display 216 at the time of receipt of the selection / confirmation input).

In turn, the intermediation server 108 interacts with the relevant supplier subsystems 104 (e.g., the supplier subsystems 104-1 and 104-4, in this example) to cancel or modify the original components identified in the request 1000 and purchase or otherwise secure on behalf of the traveler the selected updated components. The intermediation server 108 may also retrieve additional profile data 1004 from the repository 120 for use in the above interactions, such as payment information and the like.

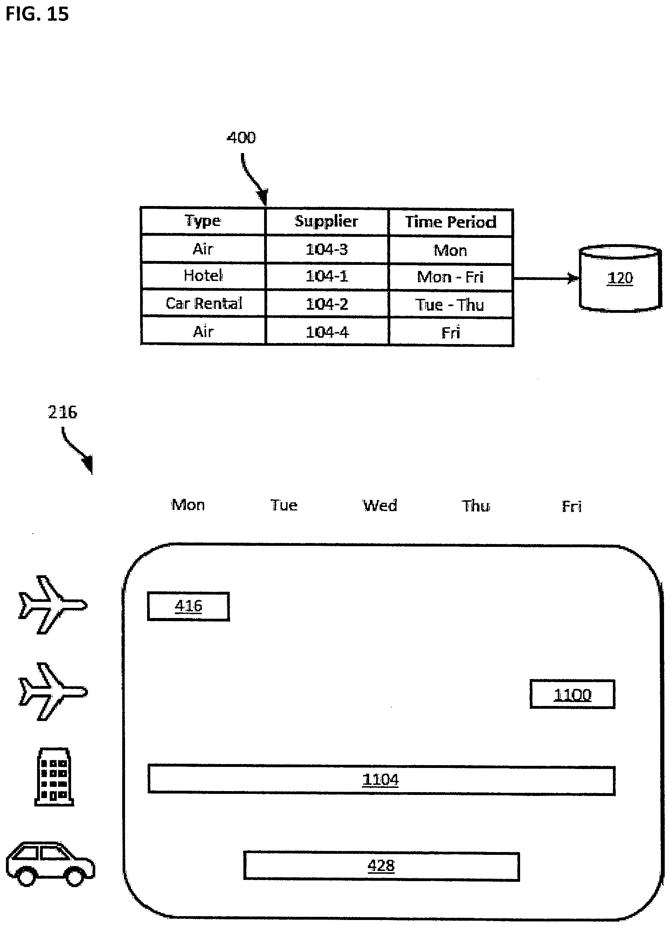

When the modification of the itinerary initiated at block 330 is complete, the intermediation server 108 can return the updated itinerary 400 to the client device 116. FIG. 15 illustrates an updated version of the itinerary 400, as stored in the repository 120, in which the hotel and return flight components have been updated as reflected by the candidate components shown in FIG. 13. As a result, the renderer 228 can update the display 216 to present the updated itinerary 400, in which the graphical elements 420 and 424 are replaced with graphical elements 1100 and 1104, reflecting the attributes of the updated hotel reservation and return flight.

As is evident from the above, various embodiments of approaches and methodologies of the present disclosure are presented.

For example, referring to the description of FIGS. 5 to 15, various embodiments relating to a travel-related complex data record are explained. Such embodiments may correspond to, based on or include the following example aspects:

In a first example aspect, a system comprises: a memory storing a travel itinerary, the travel itinerary containing a plurality of itinerary components, each itinerary component defined by at least (i) a component type, and (ii) a component time period; a set of interfaces configured to connect to respective supplier systems; a content handler configured to: receive input data defining a modification to a first one of the itinerary components, in response to receipt of the input data, automatically select a subset of the itinerary components that are temporally associated with the modification to the first itinerary component, and for each itinerary component in the subset, retrieve, via a corresponding one of the interfaces, at least one updated itinerary component; and a renderer configured to present the updated itinerary components.

In a second example aspect, the content handler is further configured, in order to retrieve the at least one updated itinerary component for each itinerary component in the subset, to: generate a request containing component attributes including (a) the component type of the itinerary component in the subset, and (b) a time period attribute selected according to the modification.

In a third example aspect the memory is further configured to store a traveler profile associated with the travel itinerary; and the component attributes further include at least one attribute retrieved from the traveler profile.

In a fourth example aspect the content handler is further configured to: responsive to presentation of the at least one updated itinerary component via the renderer, receive a selection of the at least one updated itinerary component; transmit a transaction request via one of the interfaces corresponding to the type of the selected updated itinerary component.

In a fifth example aspect, the content handler is further configured to: receive, for at least one itinerary component in the subset, a plurality of candidate updated itinerary components; and automatically select one of the candidate updated itinerary components for presentation via the renderer.

In a sixth example aspect, the modification includes a modified time period of the first itinerary component; and the content handler is configured, to automatically select the subset, to compare the modified time period with the time periods of the remaining itinerary components.

In a seventh example aspect the content handler is further configured to automatically select any of the itinerary components having time periods that occur during or after a start time of the modified time period.

In an eighth example aspect, the renderer is configured to present selectable graphical elements corresponding to respective itinerary components; and the input data comprises a selection of one of the graphical elements.

In a ninth example aspect, the renderer is configured to present further graphical elements corresponding to the updated itinerary components, the further graphical elements having at least one graphical attribute distinct from the graphical elements.

In a tenth example aspect, the content handler is further configured to: in response to receipt of the input data, retrieve an additional proposed itinerary component; and pass the additional proposed itinerary component to the renderer along with the updated itinerary components.

In an eleventh example aspect, a method comprises: storing a travel itinerary in a memory, the travel itinerary containing a plurality of itinerary components, each itinerary component defined by at least (i) a component type, and (ii) a component time period; receiving input data defining a modification to a first one of the itinerary components; in response to receipt of the input data, automatically selecting a subset of the itinerary components that are temporally associated with the modification to the first itinerary component; and for each itinerary component in the subset, retrieving, via a corresponding one of a set of interfaces configured to connect to respective supplier systems, at least one updated itinerary component; and presenting the updated itinerary components.

In a twelfth example aspect, retrieving the at least one updated itinerary component for each itinerary component in the subset includes: generating a request containing component attributes including (a) the component type of the itinerary component in the subset, and (b) a time period attribute selected according to the modification.

In a thirteenth example aspect, the method further comprises: storing a traveler profile associated with the travel itinerary; wherein the component attributes further include at least one attribute retrieved from the traveler profile.

In a fourteenth example aspect, the method further comprises: responsive to presentation of the at least one updated itinerary component via the renderer, receiving a selection of the at least one updated itinerary component; transmitting a transaction request via one of the interfaces corresponding to the type of the selected updated itinerary component.

In a fifteenth example aspect, the method further comprises: receiving, for at least one itinerary component in the subset, a plurality of candidate updated itinerary components; and automatically selecting one of the candidate updated itinerary components for presentation via the renderer.

In a sixteenth example aspect, the modification includes a modified time period of the first itinerary component; wherein automatically selecting the subset includes comparing the modified time period with the time periods of the remaining itinerary components.

In a seventeenth example aspect, the method further comprises: automatically selecting any of the itinerary components having time periods that occur during or after a start time of the modified time period.

In an eighteenth example aspect, the method further comprises: presenting selectable graphical elements corresponding to respective itinerary components; wherein the input data comprises a selection of one of the graphical elements.

In a nineteenth example aspect, the method further comprises: presenting further graphical elements corresponding to the updated itinerary components, the further graphical elements having at least one graphical attribute distinct from the graphical elements.

In a twentieth example aspect, the method further comprises: in response to receipt of the input data, retrieving an additional proposed itinerary component; and passing the additional proposed itinerary component to the renderer along with the updated itinerary components.

In a twenty-first example aspect, determining the candidate updated complex data record comprises: preparing normalized representations of the retrieved candidate updated data elements; and performing optimization of the candidate updated complex data record based on the normalized representations of the retrieved candidate updated data elements.

In a twenty-second example aspect, the optimization is based on a value function by which a value of a candidate updated complex data record is calculated using values of the normalized representations of the retrieved candidate updated data elements and weights of the normalized representations of the retrieved candidate updated data elements.

In a twenty-third example aspect, the values of the normalized representations of the retrieved candidate updated data elements are based on an ontology for the normalized representations of the retrieved candidate updated data elements.

Those skilled in the art will appreciate that in some embodiments, the functionality of the applications 220 and 262 may be implemented using pre-programmed hardware or firmware elements (e.g., application specific integrated circuits (ASICs), electrically erasable programmable read-only memories (EEPROMs), etc.), or other related components.

Those skilled in the art will appreciate that in some embodiments, the functionality of the applications 220 and 262 may be implemented at other instances, locations or entities of the system. For example, in the above example, the itinerary modification is implemented by application 220 at the client device 116 and the itinerary management is implemented by application 262 at the intermediation server 108, while at least parts of one or both of these functionalities may be implemented otherwise and/or distributed over the system in a different manner.

In various embodiments, operations such as receiving a modification indication, identifying associated components or data elements, retrieving candidate update components or data elements, determining a candidate updated complex data record, such as e.g., an itinerary and returning a candidate updated complex data record, such as e.g., an itinerary, may be realized (in any conceivable combination) by/at a client device and/or a handler or intermediation server.

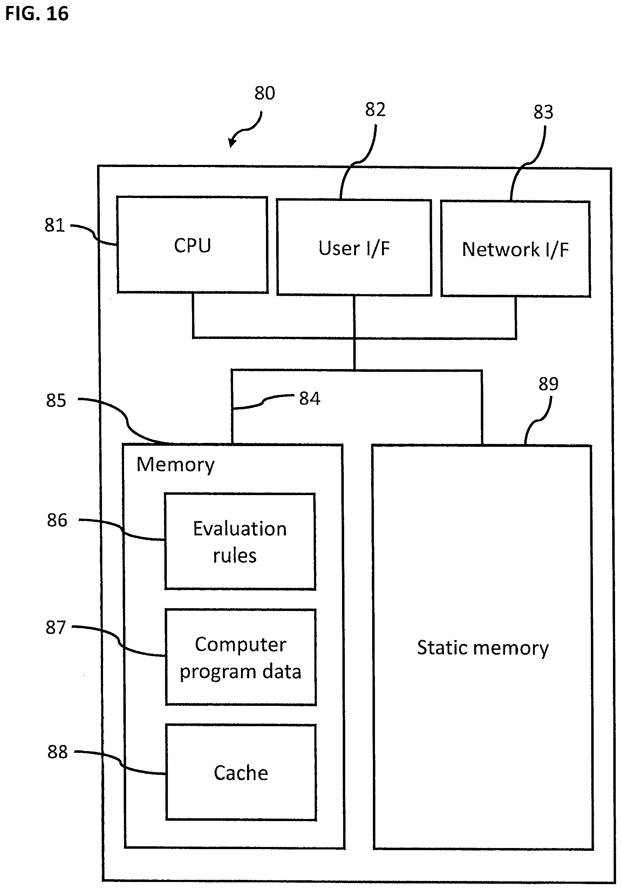

FIG. 16 is a diagrammatic representation of an internal structure of a computing or computation device 80 implementing one or more functionalities of the present disclosure. The computing or computation device 80 may correspond or relate to a client device and/or a handler or intermediation server, as described above. The computing or computation device 80 includes a set of instructions to cause the client device and/or a handler or intermediation server to perform any of the methodologies discussed herein when executed. The computing or computation device 80 includes at least one processor 81, a main memory 85 and a network interface device 83 which communicate with each other via a bus 84. Optionally, the computing or computation device 80 may further include a static memory 89 and a disk-drive unit. A video display, an alpha-numeric input device and a cursor control device may be provided as examples of a user interface 82. The network interface device 83 connects the computing or computation device 80 to the other components of the system or any further components.

The computing or computation device 80 includes a memory 85 such as main memory, random access memory (RAM) and/or any further volatile memory. The main memory 85 may store temporary program data to facilitate the functionality of a client device and/or a handler or intermediation server. The main memory 85 may also store computer program data 87 that are needed for the respective operations. The memory 85 may also temporarily store any (intermediate) results.

A set of computer-executable instructions (computer program code 87) embodying any one, or all, of the methodologies described herein, resides completely, or at least partially, in or on a machine-readable storage medium, e.g., the memory 85. For example, the instructions 87 may include software processes implementing any one of the above-described functionality.

The instructions 87 may further be transmitted or received as a propagated signal via the Internet through the network interface device 83 or via the user interface 82. Communication within the computing or computation device 80 is performed via a bus 84. Basic operation of the respective entity or entities is controlled by an operating system which is also located in the memory 85, the at least one processor 81 and/or the static memory 89.

In general, the routines executed to implement the embodiments, whether implemented as part of an operating system or a specific application, component, program, object, module or sequence of instructions, or even a subset thereof, may be referred to herein as "computer program code" or simply "program code". Program code typically comprises computer-readable instructions that are resident at various times in various memory and storage devices in a computer and that, when read and executed by one or more processors in a computer, cause that computer to perform the operations necessary to execute operations and/or elements embodying the various aspects of the embodiments of the invention. Computer-readable program instructions for carrying out operations of the embodiments of the invention may be, for example, assembly language or either source code or object code written in any combination of one or more programming languages.

In certain alternative embodiments, the functions and/or acts specified in the flowcharts, sequence diagrams, and/or block diagrams may be re-ordered, processed serially, and/or processed concurrently without departing from the scope of the present disclosure. Moreover, any of the flowcharts, sequence diagrams, and/or block diagrams may include more or fewer blocks than those illustrated consistent with embodiments of the present disclosure. The terminology used herein is for the purpose of describing particular embodiments only and is not intended to be limiting of the embodiments of the disclosure. It will be further understood that the terms "comprise" and/or "comprising," when used in this specification, specify the presence of stated features, integers, steps, operations, elements, and/or components, but do not preclude the presence or addition of one or more other features, integers, steps, operations, elements, components, and/or groups thereof. Furthermore, to the extent that the terms "include", "having", "has", "with", "comprised of", or variants thereof are used in either the detailed description or the claims, such terms are intended to be inclusive in a manner similar to the term "comprising".

The scope of the claims should not be limited by the embodiments set forth in the above examples, but should be given the broadest interpretation consistent with the description as a whole.

While a description of various embodiments has illustrated all of the present disclosure and while these embodiments have been described in considerable detail, it is not the intention to restrict or in any way limit the scope of the appended claims to such detail. Additional advantages and modifications will readily appear to those skilled in the art. The invention in its broader aspects is therefore not limited to the specific details, representative apparatus and method, and illustrative examples shown and described. Accordingly, departures may be made from such details without departing from the spirit or scope of the general inventive concept as presented herein.

## Claims

**1.** A method for handling complex database result sets performed by a database system, the database system comprising:
a memory storing a complex data record comprising a plurality of data elements of different types;
communication links to a plurality of databases hosting data elements of different types including at least first database hosting data elements of a first type and second database hosting data elements of a second type;
the method comprising:
receiving an indication defining a modification to at least a first data element of the data elements of the complex data record stored in the memory,
in response to receipt of the indication, automatically identifying a number of second data elements of the complex data record which are associated with the first data element subject to the modification, the identified second data elements including at least a first type data element and a second type data element;
for each identified second data element, retrieving, via the communication links, a number of candidate updated data elements from the plurality of databases in parallel including retrieving a number of candidate updated first type data elements from the first database and retrieving a number of candidate updated second type data elements from the second database in parallel;
determining a candidate updated complex data record based on the retrieved candidate updated data elements including the candidate updated first type data elements and the candidate updated second type data elements; and
returning the candidate updated complex data record.

**2.** The method of claim 1, wherein determining the candidate updated complex data record comprises:
preparing normalized representations of the retrieved candidate updated data elements;
comparing the normalized representations of the retrieved candidate updated data elements; and
selecting, based on the comparing, at least one candidate updated first type data element and at least one candidate updated second type data element to be included in the candidate updated complex data record.

**3.** The method of claim 2, wherein the normalized representations of the retrieved candidate updated data elements are prepared on the basis of at least a subset of parameter values of the retrieved candidate updated data elements.

**4.** The method of any one of claims 1 to 3, wherein retrieving the number of candidate updated data elements from the plurality of databases in parallel comprises:
generating a request containing data element attributes according to the modification.

**5.** The method of any one of claims 1 to 4, further comprising:
in response to returning the candidate updated complex data record, receiving a selection of one of the candidate updated first type data elements and one of the candidate updated second type data elements;
determining an update sequence to update the first database and the second database based on the received selection;
sequentially transmitting transaction requests via the communication links to the first database and to the second database in accordance with the determined update sequence to update the first database and the second database based on the received selection.

**6.** The method of claim 5, further comprising:
in response to receiving the selection of one of the candidate updated first type data elements and one of the candidate updated second type data elements, updating the complex data record based on the selected updated first type data element and the selected updated second type data element.

**7.** The method of any one of claims 1 to 6, wherein
retrieving the number of candidate updated data elements from the plurality of databases in parallel comprises receiving a plurality of candidate updated first type data elements and a plurality of candidate updated second type data elements; and
determining a candidate updated complex data record comprises automatically selecting one of the received plurality of candidate updated first type data elements and one of the received plurality of candidate updated second type data elements.

**8.** The method of claim 7, wherein
the modification includes one or more modified parameter values of the first data element; and
automatically selecting one of the received plurality of candidate updated first type data elements and one of the received plurality of candidate updated second type data elements comprises comparing one or more modified parameter values of the first data element with corresponding parameter values of the received candidate updated data elements.

**9.** The method of any one of claims 1 to 8, further comprising:
presenting selectable graphical elements corresponding to respective data elements of the complex data record, the graphical elements being representative of one or more parameter values of the data elements of the complex data record;
wherein the indication defining the modification to the first data element comprises, represents or is based on a selective operation on one of the graphical elements being representative of the one or more modified parameter values of the first data element.

**10.** The method of claim 9, wherein returning the candidate updated complex data record comprises updating the graphical elements corresponding to the candidate updated data elements.

**11.** A database system for handling complex database result sets, the database system comprising:
a memory storing a complex data record comprising a plurality of data elements of different types;
communication links to a plurality of databases hosting data elements of different types including at least first database hosting data elements of a first type and second database hosting data elements of a second type;
the database system being arranged to:
receive an indication defining a modification to at least a first data element of the data elements of the complex data record stored in the memory,
in response to receipt of the indication, automatically identify a number of second data elements of the complex data record which are associated with the first data element subject to the modification, the identified second data elements including at least a first type data element and a second type data element;
for each identified second data element, retrieve, via the communication links, a number of candidate updated data elements from the plurality of databases in parallel including retrieving a number of candidate updated first type data elements from the first database and retrieving a number of candidate updated second type data elements from the second database in parallel;
determine a candidate updated complex data record based on the retrieved candidate updated data elements including the candidate updated first type data elements and the candidate updated second type data elements; and
return the candidate updated complex data record.

**11.** The database system of claim 11, further arranged to perform the method of any one of claims 2 to 10.

**12.** A computer program with instructions which, when executed by at least one processor, implement the method of any one of claims 1 to 10.

**13.** A computer-readable storage medium storing program instructions, which, when executed by at least one processor, implement the method of any one of claims 1 to 10.
